# EUROPEAN PATENT APPLICATION

(11) **EP 1 403 798 A1**
(43) Date of publication of application: **31.03.2004**
(21) Application number: 02743700.3
(22) Date of filing: 24.06.2002
(51) Int. Cl.: G06F 17/60, G06F 15/00, G06F 13/00

(54) **CHARGING METHOD, CHARGING APPARATUS, CHARGING PROGRAM, AND RECORDING MEDIUM**

(30) Priority: 25.06.2001 JP 2001191670
(71) Applicant: NTT DoCoMo, Inc., Tokyo 100-6150 (JP)
(72) Inventor: MATSUBARA, Masayuki, c/o NTT DoCoMo, Inc., Tokyo 100-6150 (JP); JINGUJI, Makoto, c/o NTT DoCoMo, Inc., Tokyo 100-6150 (JP); KIMOTO, Masatoshi, c/o NTT DoCoMo, Inc., Tokyo 100-6150 (JP); HARA, Tomoki, c/o NTT DoCoMo, Inc., Tokyo 100-6150 (JP)
(74) Representative: GROSSE BOCKHORNI SCHUMACHER
(86) International application number: PCT/JP2002/006292
(87) International publication number: WO 2003/007207

(57) **Abstract**

A charge processing device 10 is arranged with a sending/receiving control unit 42 and a charge processing unit 44. Sending/receiving control unit 42 receives, from a mobile communication terminal 16, which is to be a contents giving source, a contents purchase request, which is a request for purchasing specific contents stored in a contents server device 24 and sending (giving as a gift) the contents to a mobile communication terminal 18. Also, sending/receiving control unit 42 sends to contents server device 24 a contents sending instruction, which instructs the sending of the contents specified by the abovementioned specific contents to mobile communication terminal 18. In the process wherein the abovementioned specific contents are sent from contents server device 24 to mobile communication terminal 18 based on the abovementioned contents sending instruction, charge processing unit 44 carries out a charge process, concerning the fee of the contents, on the user of mobile communication terminal 16 who is to be the contents giving source.

## Description

### Field of the Art

This invention concerns a charge processing method, charge processing device, and charge processing program, and particularly concerns a charge processing method, charge processing device, and charge processing program for carrying out a charge process in the process of delivering contents via a network.

### Background Art

With the development of the internet and other network communication technologies, it has become possible for a user of a personal computer, portable telephone, or other terminal device to use the desired contents upon downloading such contents into one's own terminal device via a network.

Also in accompaniment with the development of online settlement processing, the downloading of paid contents has come to be performed frequently. Known methods of such online settlement processing include (1) prepaid systems, with which an ID is provided to a terminal device (or a user of a terminal device) in exchange for payment of a fixed sum and the downloading of paid contents up to an amount corresponding to the abovementioned fixed sum as a limit is enabled by use of the abovementioned ID, (2) credit card systems, with which, in downloading paid contents into a terminal device, credit card information on a user of the terminal device is sent to a contents server device and a settlement process concerning the fees of the paid contents is carried out using the abovementioned credit card information, (3) calling fee addition systems, with which in the case where a terminal device is a portable telephone or other mobile communication terminal, the fees for paid contents downloaded into the mobile communication terminal are added to the calling fee for the mobile communication terminal to carry out a settlement process. In the settlement process of (1) to (3) described above, a charge process is carried out by a charge processing device provided at a prepaid information management company, credit card company, and a mobile communication carrier, respectively. To be more specific, when contents are downloaded into a terminal device, subtraction (in the case of a prepaid system) or addition of a charged sum (in the case of a credit card system or calling fee addition system) is performed on the usage credit balance, which concerns the user of the corresponding terminal and is stored in a charge database of a charge processing device.

### Disclosure of the Invention

However, with a charge processing device of an abovementioned prior art, since the subject for which the charge processing is to be performed is, in all cases, a user of a terminal device into which paid contents have been downloaded, a finely tuned charge process that is in accordance to the form of use of the paid contents could not be carried out. For example, in a case where a user of one terminal device intends to give paid contents as a gift to a user of another terminal, it was not possible to make the paid contents be downloaded into the abovementioned other terminal device while carrying out a charge process on the abovementioned user of one terminal.

Thus an object of this invention is to provide a charge processing method, charge processing device, charge processing program, and recording medium, which enable finely tuned charge processing to be carried out in accordance to the form of use of paid contents.

In order to achieve the above object, this invention provides a charge processing method comprising the steps of: a notification process, wherein contents specifying information, for specifying contents, and sending destination specifying information, for specifying the sending destination to which the contents are to be sent, are notified to a contents server device from a terminal device; a sending process, wherein the contents specified by the abovementioned contents specifying information are sent from the abovementioned contents server device to the sending destination specified by the abovementioned sending destination specifying information; and a charge process, wherein a charge processing device carries out a charge process, concerning the sending of the abovementioned contents, on a user of the abovementioned terminal device.

Also in order to achieve the above object, this invention provides a charge processing device characterized in receiving contents specifying information for specifying contents, and sending destination specifying information for specifying the sending destination to which the contents are to be sent, from a terminal device, outputting to a contents server device a sending instruction instructing that the contents specified by the abovementioned contents specifying information are to be sent to the sending destination specified by the abovementioned sending destination specifying information, and carrying out a charge process, concerning the sending of the abovementioned contents, on a user of the abovementioned terminal device.

Also in order to achieve the above object, this invention provides a charge processing program characterized in realizing the functions of: receiving, from a terminal device, contents specifying information for specifying contents, and sending destination specifying information for specifying the sending destination to which the contents are to be sent; outputting to a contents server device a sending instruction instructing that the contents specified by the abovementioned contents specifying information are to be sent to the sending destination specified by the abovementioned sending destination specifying information; and carrying out a charge process concerning the sending of the abovementioned contents on a user of the abovementioned terminal device.

Furthermore in order to achieve the above object, this invention provides a recording medium characterized in having the abovementioned charge processing program recorded therein.

By notifying contents specifying information and sending destination specifying information to a contents server device from a terminal device, sending the abovementioned contents from the abovementioned contents server device to the abovementioned sending destination, and carrying out a charge process concerning the sending of the abovementioned contents on the user of the abovementioned terminal device by means of a charge processing device, not only can charge processing on a user of a terminal device to which paid contents are downloaded be performed but charge processing on a user who has instructed the downloading of paid contents into a terminal device used by a third party can also be performed. As a result, a finely tuned charge process that is in accordance to the form of use of paid contents, for example, the charging of fees for paid contents to a user of one terminal device in a case where this user of one terminal device intends to provide the paid contents as a gift to a user of another terminal becomes possible.

### Brief Description of the Drawings

Fig. 1 is a block diagram of an information communication network that includes a charge processing device.
Fig. 2 is a flowchart, showing the procedures for a count registration process.
Fig. 3 is a flowchart, showing the procedures for a contents sending process and a settlement process.
Figs. 4 through 8 are block diagrams of a charge database.
Fig. 9 is a block diagram of a recording medium, in which a charge processing program is recorded.
Fig. 10 is a block diagram of an information communication network that includes a charge processing device.
Fig. 11 is a flowchart, showing the procedures for a credit card information registration process.
Fig. 12 is a flowchart, showing the procedures for a contents sending process and settlement process.
Fig. 13 is a flowchart, showing the procedures for a credit card settlement process.
Figs. 14 and 15 are block diagrams of a charge database.

### Best Mode for Carrying Out the Invention

A charge processing device of an embodiment of this invention shall now be described.

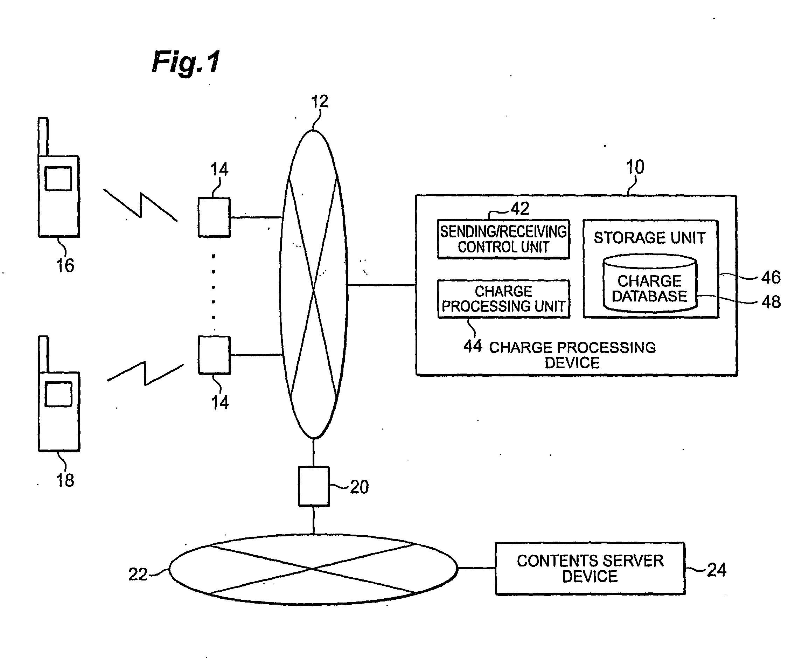

First, the arrangement of an information communication network that includes a charge processing device shall be described. Fig. 1 is a block diagram of an information communication network that includes a charge processing device. As shown in Fig. 1, a charge processing device 10 is connected to a mobile communication network 12 and is arranged to carry out a charge process on a user who sends and receives information via mobile communication network 12. Mobile communication network 12 is provided with a plurality of base stations 14 and mobile communication terminals 16 and 18 are enabled to perform data communication with each other via the plurality of base stations 14. Mobile communication network 12 is also connected to the internet 22 via a gateway 20. Users of mobile communication terminals 16 and 18 can thus download desired contents into their own mobile communication terminals 16 and 18 from a contents server device 24 connected to the internet 22. The contents here include still image data, moving image data, music data, text data, etc.

Charge processing device 10 is a charge processing device, which, in a situation where, for example, the user of mobile communication terminal 16 intends to give paid contents stored in contents server device 24 to the user of mobile communication terminal 18 as a gift, can charge the fee for the paid contents to the user of mobile communication terminal 16, who is to be the contents giving source. Charge processing device 10 shall now be described for such a situation as an example.

First, the arrangement of charge processing device 10 shall be described. Physically, charge processing device 10 is arranged as a computer system equipped with a CPU (central processing unit), a memory, a hard disk or other storage device, a communication unit or other sending/receiving device, etc.

Functionally, charge processing device 10 is arranged with a sending/receiving control unit 42, a charge processing unit 44, and a storage unit 46 as shown in Fig. 1.

Sending/receiving control unit 42 receives, from mobile communication terminal 16, which is to be the contents giving source, a contents purchase request, which is a request concerning the purchasing of specific contents stored in contents server device 24 and sending (giving as a gift) the contents to a specific sending destination (mobile communication terminal 18 in the present case). Included in the contents purchase request are a user ID, which identifies the mobile communication terminal 16 (or the user of mobile communication terminal 16) that is to be the contents giving source, a contents identification code for specifying the contents to be sent, a sending destination mail address for specifying the sending destination (receiver) of the contents, and additional information to be sent along with the contents.

Upon receiving the abovementioned contents purchase request, sending/receiving control unit 42 newly provides a temporary ID, which differs from the abovementioned user ID, to the mobile communication terminal 16 that has sent the contents purchase request.

Sending/receiving control unit 42 furthermore sends to contents server device 24 a contents sending instruction, which instructs the sending of the abovementioned specific contents and the abovementioned additional information to the abovementioned specific sending destination (mobile communication terminal 18 in the present case). Included in the contents sending instruction are the abovementioned temporary ID, the abovementioned contents identification code, the abovementioned sending destination mail address, and the abovementioned additional information.

When contents server device 24 sends the abovementioned specific contents to the abovementioned specific sending destination (mobile communication terminal 18 in the present case) based on the abovementioned contents sending instruction, charge processing unit 44 carries out a charge process on the user of mobile communication terminal 16, who becomes the contents giving source.

Here, the abovementioned functions respectively possessed by sending/receiving control unit 42 and charge processing unit 44 are realized, for example, by a CPU executing a program stored in a hard disk of a computer system.

A charge database 48 is stored in storage unit 46. The abovementioned user ID and a count, which indicates the balance after subtraction of the fee of the purchased contents from a prepaid fee that has been paid in advance, are stored in an associated manner in charge database 48.

The operations of charge processing device 10 shall now be described along with a charge processing method of the embodiment of this invention.

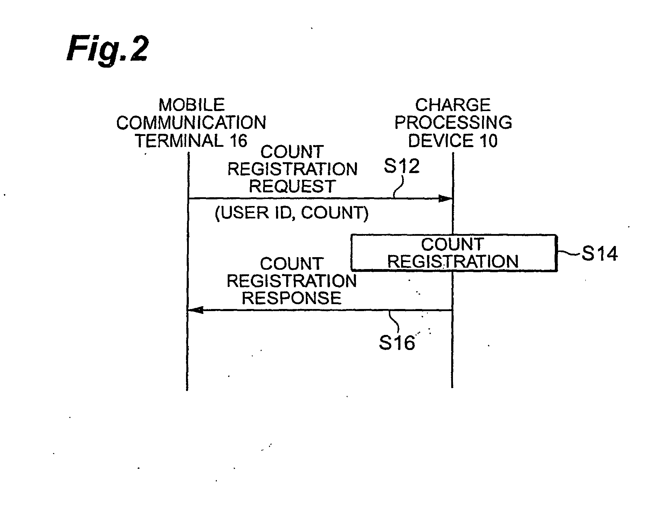

First among the operations of charge processing device 10, a count registration process is carried out. In the count registration process, the user of mobile communication terminal 16, who is to be the contents giving source, pays a fixed prepaid fee at a monetary institution in advance and registers information, indicating that this fixed prepaid fee has been paid, in charge processing device 10. The abovementioned fixed prepaid fee payment may be carried out by the purchasing of a prepaid card. Fig. 2 is a flowchart, showing the procedures for the count registration process. First, as shown in Fig. 2, a count registration request, which requests for count registration, is sent from mobile communication terminal 16 to charge processing device 10 (S12). The abovementioned user ID and a count corresponding to the prepaid fee that has been paid are included in the count registration request. Here, the count may be "500" if the prepaid fee is 500 yen or the count may be "1000" if the prepaid fee is 1000 yen, etc.

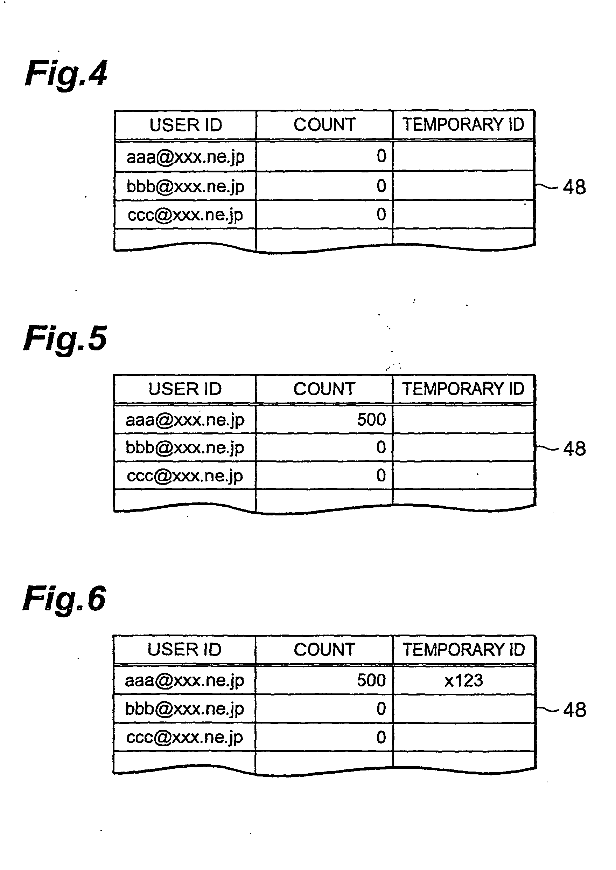

When the count registration request is received by sending/receiving control unit 42 of charge processing device 10, a count registration process is carried out (S14) by sending/receiving control unit 42. To be more specific, the count, which is included in the count registration request, is added to the count column, corresponding to the user ID that is included in the count registration request, in charge database 48 stored in storage unit 46. Figs. 4 and 5 are block diagrams of charge database 48. Prior to the count registration process, the values in the count columns of charge database 48 that correspond to the respective user ID's are "0" as shown in Fig. 4. When in this state, a count registration request, which includes, for example, a user ID of "aaa@xxx.ne.jp" and a count of "500," is sent from mobile communication terminal 16, the abovementioned count registration process is carried out, and as shown in Fig. 5, the value in the count column of charge database 48 that corresponds to the user ID "aaa@xxx.ne.jp" becomes "500."

Returning now to Fig. 2, when the count registration process is completed, a count registration response, which indicates that the count registration process has been completed, is sent from sending/receiving control unit 42 of charge processing device 10 to mobile communication terminal 16 (S16).

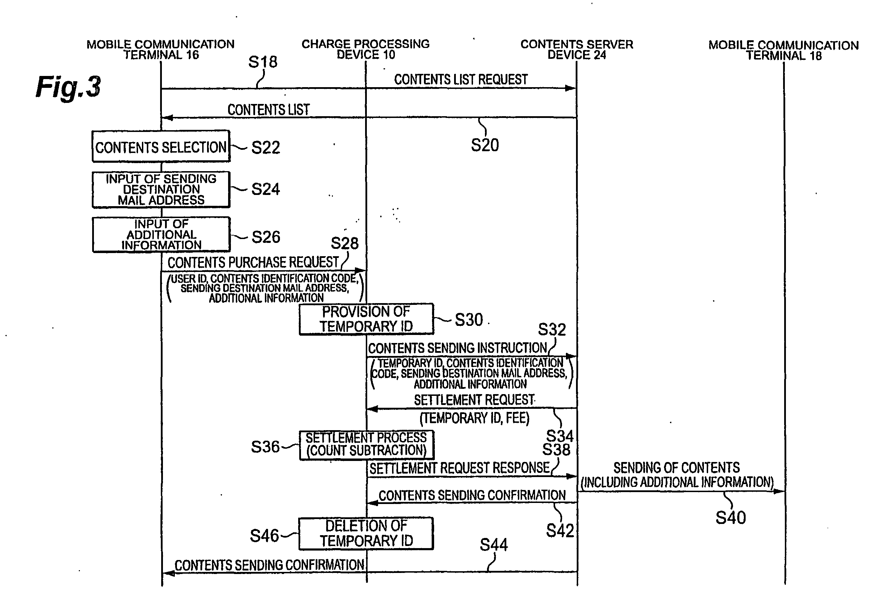

A contents sending process and a settlement process shall now be described. Fig. 3 is a flowchart, showing the procedures for the contents sending process and the settlement process. In the case where the user of mobile communication terminal 16 intends to send (give as a gift) contents to mobile communication terminal 18, first, a contents list request, by which the sending of a contents list is requested, is sent from mobile communication terminal 16 to contents server device 24 in accordance to an instruction input by the user of mobile communication terminal 16 (S18). In response to the contents list request, the contents list is sent from contents server device 24 to mobile communication terminal 16 (S20). The contents list received by mobile communication terminal 16 is then displayed on the display of mobile communication terminal 16.

The user of mobile communication terminal 16, who has referenced the contents list, then selects the specific contents to be sent (given as a gift) to mobile communication terminal 18 (S22), inputs the mail address of mobile communication terminal 18, which is to be the sending destination (S24), and inputs additional information (S26). A contents purchase request, which is a request indicating that the user of mobile communication terminal 16 will purchase the abovementioned specific contents and send (give as a gift) the contents to mobile communication terminal 18, is then sent from mobile communication terminal 16 to charge processing device 10 (S28). A user ID that identifies mobile communication terminal 16, a contents identification code that identifies the abovementioned specific contents, the sending destination mail address (the mail address of mobile communication terminal 18 in the present case), and the abovementioned additional information are included in the contents purchase request. Though a mail address is used here as the user ID, a telephone number, IP address, an ID provided to the user using the present service, etc., may be used as the user ID. Also, though a mail address is used here as the sending destination of the contents, a telephone number, IP address, etc., may be used as the sending destination instead. Furthermore, text data, such as "Happy Birthday!", etc., audio data, image data, such as a facial portrait of the user of mobile communication terminal 16, who is the giving source of contents, etc., correspond broadly to being the additional information. The name, mail address, etc., of the user of mobile communication terminal 16, who is the giving source of contents, may also be included in the additional information.

When the contents purchase request is received by sending/receiving control unit 42 of charge processing device 10, sending/receiving control unit 42 provides the mobile communication terminal 16, which has sent the contents purchase request, with a temporary ID that differs from the abovementioned user ID (S30), and this temporary ID is stored in charge database 48 of storage unit 46. Fig. 6 is a block diagram of charge database 48. For example, when the contents purchase request, which includes the user ID "aaa@xxx.ne.jp" is sent from mobile communication terminal 16 to charge processing device 10, sending/receiving control unit 42 provides mobile communication terminal 16 with the temporary ID "x123" that differs from the user ID "aaa@xxx.ne.jp," and as shown in Fig. 6, the temporary ID "x123" is stored in charge database 48 in a manner where it is associated with the user ID "aaa@xxx.ne.jp."

Returning now to Fig. 3, after the temporary ID has been provided, a contents sending instruction, which instructs that the abovementioned specific contents and abovementioned additional information are to be sent to the abovementioned sending destination mail address (the mail address of mobile communication terminal 18 in the present case), is sent from sending/receiving control unit 42 of charge processing device 10 to contents server device 24 (S32). The abovementioned temporary ID, abovementioned contents identification code, abovementioned sending destination mail address, and abovementioned additional information are included in the contents sending instruction.

When the contents server device 24 receives the contents sending instruction, a settlement request, by which the settlement of the fee for the contents is requested, is sent from contents server device 24 to charge processing device 10 (S34). The abovementioned temporary ID, which was included in the abovementioned contents sending instruction, and the contents fee, which is specified by the abovementioned contents identification code, are included in the settlement request.

When sending/receiving control unit 42 of charge processing device 10 receives the abovementioned settlement request, charge processing unit 44 carries out a settlement process (S36). To be more specific, the charge database 48 stored in storage unit 46 is searched using the temporary ID, included in the abovementioned settlement request, as a key, and a count corresponding to the fee included in the settlement request is subtracted from the count corresponding to the temporary ID in charge database 48.

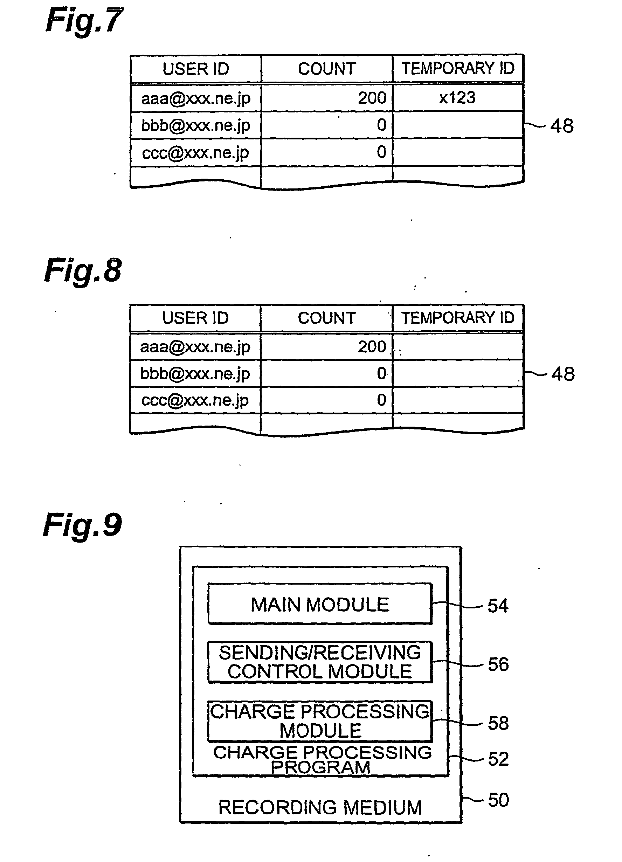

Figs. 6 and 7 are block diagrams of charge database 48. Prior to the settlement process, the value in the count column corresponding to the temporary ID "x123" of charge database 48 is "500" as shown in Fig. 6. Here, it shall be deemed that 1 count corresponds to 1 yen. If in this condition, a settlement request, containing for example the temporary ID "x123" and a fee of "300 yen," is sent from contents server device 24, the abovementioned settlement process is performed (that is, 300 is subtracted from 500), and the value in the count column corresponding to the temporary ID "x123" becomes "200" as shown in Fig. 7.

Returning now to Fig. 3, when the settlement process has been completed by charge processing unit 44, a settlement request response, which indicates that the settlement process has been completed, is sent from sending/receiving control unit 42 of charge processing device 10 to contents server device 24 (S38). In a case where the balance is short, that is, in a case where the count registered in charge database 48 is less than the count corresponding to the contents fee and the settlement process cannot be carried out, that the settlement process has failed is notified to contents server device 24 from sending/receiving control unit 42 of charge processing device 10 and the processes are ended.

When contents server device 24 receives the abovementioned settlement request response, the contents specified by the abovementioned contents identification code that is included in the priorly-received contents sending instruction, and the additional information included in the abovementioned contents sending instruction are sent to the sending destination mail address (the mail address of mobile communication terminal 18 in the present case) that is included in the abovementioned contents sending instruction (S40). Here, the sending of the contents and additional information is carried out, for example, in the form of attachment to electronic mail (E-mail).

When the contents and additional information have been sent from contents server device 24 to mobile communication terminal 18, a contents sending confirmation, indicating that the sending of the contents and additional information has been carried out, is sent from contents server device 24 to each of charge processing device 10 and mobile communication terminal 16 (S42, S44).

When sending/receiving control unit 42 of charge processing device 10 receives the abovementioned contents sending confirmation, the temporary ID that was stored in charge database 48 of storage unit 46 is deleted as shown in Fig. 8 (S46).

The actions and effects of charge processing device 10 shall now be described. Charge processing device 10 receives the contents purchase request, which includes the contents identification code and the sending destination mail address, from mobile communication terminal 16, which is the contents giving source, sends to contents server device 24 a contents sending instruction, which instructs the sending of the contents specified by the abovementioned contents identification code to the abovementioned send destination mail address, and carries out the charge process concerning the fee of the abovementioned contents on the user of mobile communication terminal 16, who is the contents giving source. Thus not only can a charge process on a user of a mobile communication terminal (mobile communication terminal 18 in the present case), into which paid contents are downloaded, be carried out, but a charge process on a user (the user of mobile communication terminal 16), who has instructed the downloading of paid contents into a mobile communication terminal (mobile communication terminal 18 in the present case) used by a third party, can also be carried out. As a result, a finely tuned charge process that is in accordance to the form of use of paid contents, for example, the charging of the fee of paid contents to a user of one mobile communication terminal when this user of one mobile communication terminal intends to give paid contents as a gift to a user of another mobile communication terminal, is enabled.

Charge processing device 10 furthermore receives additional information from mobile communication terminal 16, which is to be the contents giving source, and sends to contents server device 24 the contents sending instruction, which instructs that the additional information be sent along with the contents to the mobile communication terminal 18 that is to be the receiver of the contents. The user of mobile communication terminal 16, who is to be the contents giving source, can thus add a diversity of information, such as ''Happy Birthday!" and other characters, audio comments, facial portraits, etc., in the process of giving the contents as a gift to the mobile communication terminal 18 that is to be the receiver of the contents. User convenience is thus improved.

Furthermore, in the process of sending the ID that identifies mobile communication terminal 16, which is to be the contents giving source, to contents server device 24, charge processing device 10 sends not the user ID that was sent from mobile communication terminal 16 but the newly provided temporary ID. A charge process can thus be carried out even in a case where, for reasons of security and prevention of leakage of personal information, the user ID of mobile communication terminal 16 cannot be notified to a third party (for example, contents server device 24) besides mobile communication terminal 16 and charge processing device 10.

A charge processing program of an embodiment of this invention and a computer-readable recording medium, in which is recorded the charge processing program (shall be referred to hereinafter as simply "recording medium'') shall now be described. Here, "recording medium" refers to a medium that causes a change of magnetism, light, electricity, or other form of energy to occur, in accordance to a program's descriptive contents, on a reading device equipped in the hardware resources of a computer and can thereby transmit the descriptive contents of the program in the form of corresponding signals to the reading device. Examples of such a recording medium include magnetic disks, optical disks, CD-ROM's, memories incorporated in computers, etc.

Fig. 9 is a block diagram of a recording medium of this invention's embodiment. As shown in Fig. 9, a charge processing program 52 is recorded in this recording medium 50. Also as shown in Fig. 9, charge processing program 52 is comprised of a main module 54, which supervises processes, a sending/receiving control module 56, which realizes the function of the abovementioned sending/receiving control unit 42 of charge processing device 10 in a computer, and a charge processing module 58, which realizes the function of the abovementioned charge processing unit 44 of charge processing device 10 in a computer. When for example recording medium 50 is inserted into a reading device (for example, a CD-ROM drive device) of a computer system, the information recorded in recording medium 50 becomes accessible by the reading device and the charge processing program 52 recorded in recording medium 50 becomes executable by the computer system.

Charge processing program 52 may not only be distributed in a form recorded in a recording medium but may also be distributed online by the use of a cable line or wireless line. In this case, the charge processing program is sent by carrier wave.

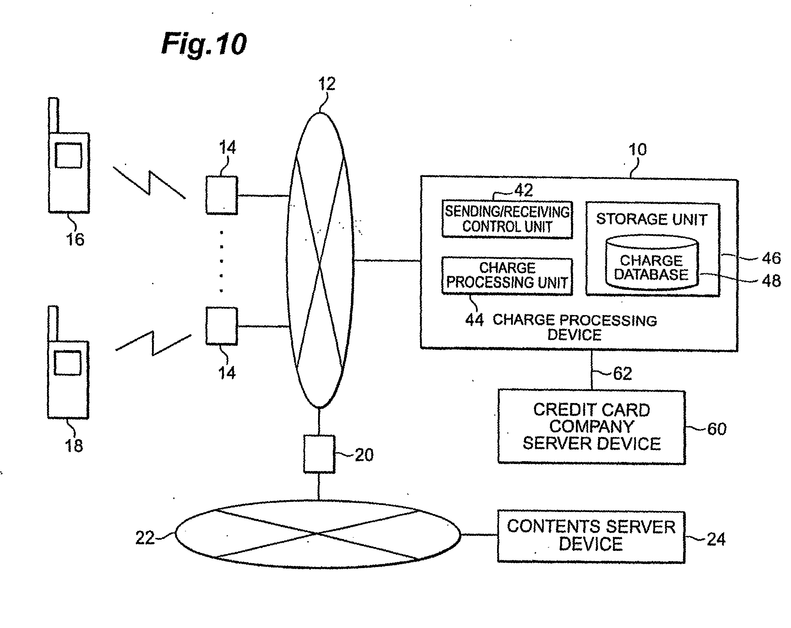

Though with charge processing device 10 of the abovementioned embodiment, a count corresponding to a prepaid fee was registered and the settlement process was carried out by subtracting a count corresponding to the fee of the purchased contents, settlement information, such as the fee of the purchased contents, seller, date of purchase, etc., may be stored and settlement by a credit card may be carried out. In this case, an information communication network, with which charge processing device 10 and a credit card company server device 60 are connected by a dedicated line 62 as shown in Fig. 10, may be considered.

The operations of charge processing device 10 in the case where settlement by a credit card is to be carried out shall now be described in detail.

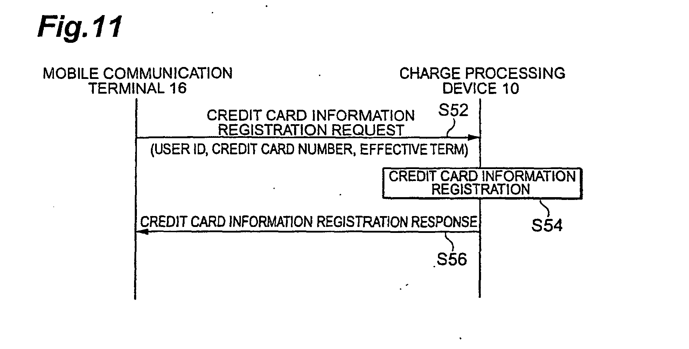

First among the operations of charge processing device 10, a credit card information registration process is carried out. In the credit card information registration process, a credit card number, effective term, and other information concerning a credit card owned by the user of mobile communication terminal 16 are registered in charge processing device 10. Fig. 11 is a flowchart, showing the procedures for the credit card information registration process. First, in the credit card information registration process, a credit card information registration request, by which the registration of credit card information is requested, is sent from mobile communication term 16 to charge processing device 10 (S52). The abovementioned user ID and the credit card number and effective term of the credit card owned by the user of mobile communication terminal 16 are included in the credit card information registration request. The credit card information may be input by means of the keys of mobile communication terminal 16 or information stored in advance in a memory of mobile communication terminal 16 may be arranged to be read out automatically.

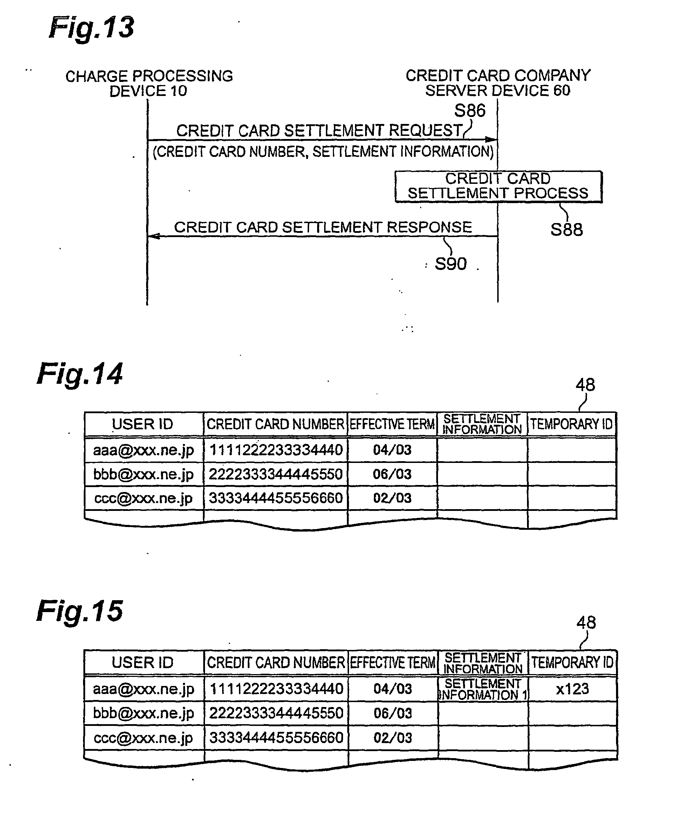

When sending/receiving control unit 42 of charge processing device 10 receives the credit card information registration request, sending/receiving control unit 42 carries out the credit card information registration process (S54). To be more specific, the user ID, credit card number, and effective term, which are included in the credit card information registration request, are stored in an associated manner in charge database 48 stored in storage unit 46 as shown in Fig. 14.

Returning now to Fig. 11, when the credit card information registration process has been completed, a credit card information registration response, indicating that the credit card information registration process has been completed, is sent from sending/receiving control unit 42 of charge processing device 10 to mobile communication terminal 16 (S56).

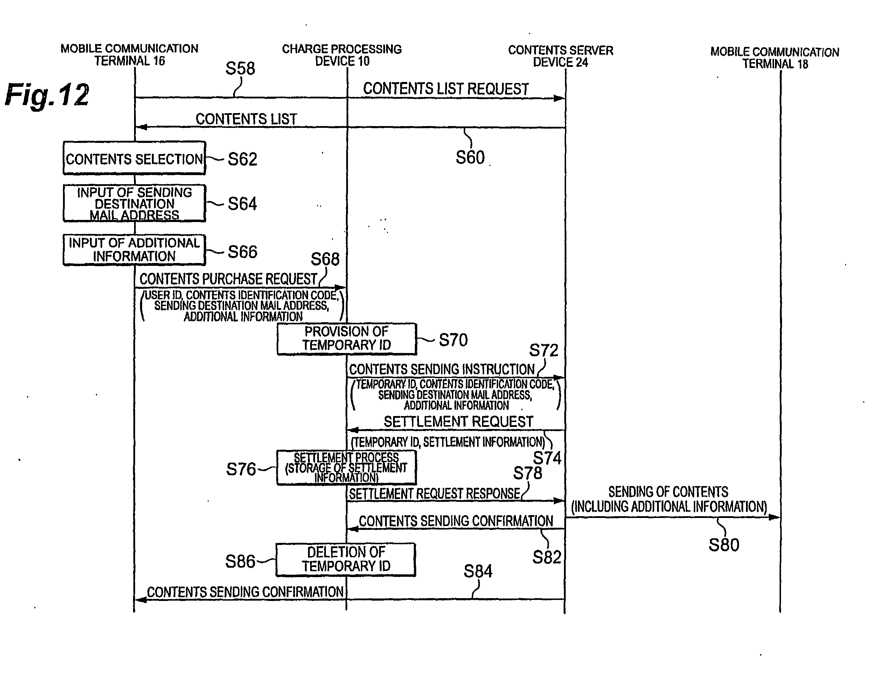

A contents sending process and a settlement process shall now be described. Fig. 12 is a flowchart, showing the procedures for the contents sending process and settlement process. Here, the processes of S58 to S72 are the same as the process of S18 to S32 described using Fig. 3.

When in S72, contents server device 24 receives a contents sending instruction, a settlement request, by which the settlement of the contents fee is requested, is sent from contents server device 24 to charge processing device 10 (S74). The abovementioned temporary ID, which is included in the abovementioned contents sending instruction, and settlement information, including the contents fee specified by the abovementioned contents identification code, information identifying the seller of the contents, date of purchase of the contents, etc., are included in the settlement request.

When sending/receiving control unit 42 of charge processing device 10 receives the abovementioned settlement request, the settlement process is carried out by charge processing unit 44 (S76). To be more specific, the charge database 48 stored in storage unit 46 is searched using the temporary ID, included in the abovementioned settlement request, as a key, and the settlement information included in the abovementioned settlement request (settlement information 1 in the present case) are stored in the settlement information column corresponding to the temporary ID in charge database 48.

Returning now to Fig. 12, when the settlement process has been completed by charge processing unit 44, a settlement request response, which indicates that the settlement process has been completed, is sent from sending/receiving control unit 42 of charge processing device 10 to contents server device 24 (S78). In a case where the effective term of the credit card is expired, etc., and the settlement process cannot be carried out, that the settlement process has failed is notified to contents server device 24 from sending/receiving control unit 42 of charge processing device 10 and the processes are ended.

The subsequent processes of S80 to S86 are the same as the processes of S40 to S46 described using Fig. 3.

The settlement information that have been stored in charge database 48 of storage unit 46 are sent in a batch at every fixed period to credit card company server device 60 and a credit card settlement process is then performed. Fig. 13 is a flowchart, showing the procedures for the credit card settlement process. To be more specific, at every fixed period (for example, one month), a credit card settlement request is sent from sending/receiving control unit 42 of charge processing device 10 to credit card company server device 60 (S86). The credit card number owned by the user of mobile communication terminal 16 and the abovementioned settlement information concerning the user of mobile communication terminal 16 are included in the credit card settlement request. Here, if the user of mobile communication terminal 16 has purchased contents once within the abovementioned fixed period, settlement information concerning this purchase are included in the abovementioned credit card settlement request, and if the user of mobile communication terminal 16 has purchased contents a plurality of times within the abovementioned fixed period, settlement information concerning the plurality of purchases are included in the abovementioned credit card settlement request.

When credit card company server device 60 receives the credit card settlement request, a credit card settlement process is carried out by credit card company server device 60 (S88). Also, when the credit card settlement process has been completed, a credit card settlement response, indicating that the credit card settlement process has been completed, is sent from credit card company server device 60 to charge processing device 10 (S90).

Settlement using a credit card is thus enabled by making charge processing device 10 operate in the abovementioned manner.

Also, in the abovementioned modification, credit card information were registered in charge processing device 10, settlement information for a fixed period were stored in charge database 48 provided in storage unit 46 of charge processing device 10, and the settlement information were sent in a batch at every fixed period to credit card server device 60. However, the contents purchase request sent to charge processing device 10 from mobile communication terminal 16 may be sent with the request including the credit card information each time and the settlement information may be arranged to be sent to credit card company server device 60 each time a purchase of contents is carried out.

Furthermore, charge processing device 10 may be arranged to enable the designation of a plurality of sending destinations for the contents. In this case, a plurality of sending destination mail addresses may be designated for inclusion respectively in the contents purchase request sent from mobile communication terminal 16 to charge processing device 10 and the contents sending instruction sent from charge processing device 10 to contents server device 24.

Also, though charge processing device 10 was used in an information communication network, such as that shown in Fig. 1 or Fig. 10, the present invention is not limited to use in such an information communication network. For example, contents server device 24 may be connected directly to mobile communication network 12 or be connected to charge processing device 10 via a dedicated line or be connected via a stationary telephone network to mobile communication network 12. Furthermore, each of the terminal device to be the contents giving source and the terminal device to which the contents is sent is not limited to being a mobile communication terminal and may be a PDA, personal computer, etc.

Also, the abovementioned credit card company server device 60 may be replaced by a mobile communication enterprise server device and the contents fee may be charged to the user of mobile communication terminal 16 by addition to the calling fee.

Also, though charge processing device 10 was arranged as a separate unit from mobile communication terminal 16, this charge processing device 10 may be incorporated inside mobile communication terminal 16. In this case, the settlement of the contents fee is preferably carried out by addition to the calling fee.

Also, though charge processing device 10 charged the contents fee to the user of mobile communication terminal 16, who is the contents giving source, the calling fee for the sending of the contents from contents server device 24 to mobile communication terminal 18 may be charged to the user of mobile communication terminal 16 as well.

### Industrial Applicability

This invention is useable as a charge processing method, charge processing device, or charge processing program for carrying out a charge process in the delivery of contents via a network.

## Claims

1. A charge processing method comprising the steps of:
a notification process, wherein contents specifying information, for specifying contents, and sending destination specifying information, for specifying the sending destination to which said contents are to be sent, are notified to a contents server device from a terminal device;
a sending process, wherein contents specified by said contents specifying information are sent from said contents server device to the sending destination specified by said sending destination specifying information; and
a charge process, wherein a charge processing device carries out a charge process, concerning the sending of said contents, on a user of said terminal device.

2. The charge processing method as set forth in Claim 1, wherein
additional information are notified from said terminal device to said contents server device in said notification process step, and
in said sending process step, the contents specified by said contents specifying information and said additional information are sent from said contents server device to the sending destination specified by said sending destination specifying information.

3. The charge processing method as set forth in Claim 1, wherein
in said notification process step, terminal device specifying information, for specifying said terminal device, is notified from said terminal device to said charge processing device, terminal device specifying information, which differs from the terminal device specifying information received from said terminal device, is provided anew at said charge processing device, and the terminal device specification information that was provided anew at said charge processing device is notified from said charge processing device to said contents server device.

4. A charge processing device **characterized in**:
receiving contents specifying information, for specifying contents, and sending destination specifying information, for specifying the sending destination to which the contents are to be sent, from a terminal device;
outputting, to a contents server device, a sending instruction instructing that the contents specified by said contents specifying information are to be sent to the sending destination specified by said sending destination specifying information; and
carrying out a charge process, concerning the sending of said contents, on a user of said terminal device.

5. The charge processing device as set forth in Claim 4, wherein
additional information are received from said terminal device, and
a sending instruction, which instructs the sending of the contents specified by said contents specifying information and said additional information to the sending destination, specified by said sending destination specifying information, is output to said contents server device.

6. The charge processing device as set forth in Claim 4, wherein
terminal device specifying information, for specifying said terminal device, is received from said terminal device
terminal device specifying information, which differs from the terminal device specifying information received from said terminal device, is provided anew, and
the terminal device specification information that was provided anew at said charge processing device is notified to said contents server device.

7. A charge processing program **characterized in** realizing, in a computer, the functions of:
receiving contents specifying information, for specifying contents, and sending destination specifying information, for specifying the sending destination to which the contents are to be sent, from a terminal device;
outputting, to a contents server device, a sending instruction instructing that the contents specified by said contents specifying information are to be sent to the sending destination specified by said sending destination specifying information; and
carrying out charge processing, concerning the sending of said contents, on a user of said terminal device.

8. The charge processing program as set forth in Claim 7, which furthermore realizes, in a computer, the functions of:
receiving additional information from said terminal device; and
outputting, to said contents server device, a sending instruction, which instructs the sending of the contents specified by said contents specifying information and said additional information to the sending destination, specified by said sending destination specifying information.

9. The charge processing program as set forth in Claim 7, which furthermore realizes, in a computer, the functions of:
receiving, from said terminal device, terminal device specifying information, for specifying said terminal device;
newly providing terminal device specifying information, which differs from the terminal device specifying information received from said terminal device; and
notifying the terminal device specification information that was provided anew to said contents server device.

10. A computer-readable recording medium having a charge processing program as set forth in Claim 7 recorded therein.
